# EUROPEAN PATENT APPLICATION

(11) **EP 1 096 494 A2**
(43) Date of publication of application: **02.05.2001**
(21) Application number: 00123242.0
(22) Date of filing: 26.10.2000
(51) Int. Cl.: G11B 23/087

(54) **Tape cassette**

(30) Priority: 27.10.1999 JP 30531299; 27.10.1999 JP 30533699
(71) Applicant: TDK Corporation, Chiyoda-ku, Tokyo (JP)
(72) Inventor: Kaneda, Hiroshi, Tokyo (JP); Shima, Motohiko, Tokyo (JP); Okamura, Masatoshi, Tokyo (JP); Sato, Shinichi, Tokyo (JP)
(74) Representative: Grünecker, Kinkeldey, Stockmair & Schwanhäusser Anwaltssozietät

(57) **Abstract**

A tape cassette which comprises a tape-like medium windingly provided in a case body having an upper case and a lower case, the tape-like medium being drawn out to an exterior of the case body, a lid adapted to be opened and closed for covering the drawn out tape-like medium while the tape cassette is not in use and for exposing the drawn out tape-like medium while the tape cassette is in use, at least one lid locking member for preventing a release of the lid when the lid is closed, and a leaf spring for biasing the lid locking member, characterized in that the leaf spring includes a fitting portion which is formed by being bent in a substantially C-shape, and a pressing portion for pressing the lid locking member, and the leaf spring is constructed in such a manner that a width and a longitudinal length of the fitting portion are different from each other. In addition, the leaf spring may include an elastically deformable projected portion formed on an upper face of the fitting portion and protruding toward the upper case, the upper case being provided with a pressing part for pressing the projected portion of the leaf spring at a position facing the projected portion.

## Description

### Background of the Invention

### 1. Field of the Invention

The present invention relates to a tape cassette in which a tape-like medium is contained in a case body and a part of the tape-like medium extending outside the body is covered with a lid which is adapted to be opened and closed.

### 2. Description of the Related Art

A conventional tape cassette of this type is known in Japanese Publication No. JP-A-4-349283 of an unexamined Patent Application.

In this tape cassette, a lid locking member for locking the lid when the lid is closed is biased by a leaf spring.

This leaf spring is formed of a strip-shaped thin plate member. A fitting portion of the leaf spring to be fitted to a lower case is formed by being bent in a substantially C-shape.

The leaf spring is so constructed that when the leaf spring is attached to a rib of a lower case, and an upper case is further mounted thereon, an upper face of the fitting portion of the leaf spring is pressed with a rib of the upper case.

### Summary of the Invention

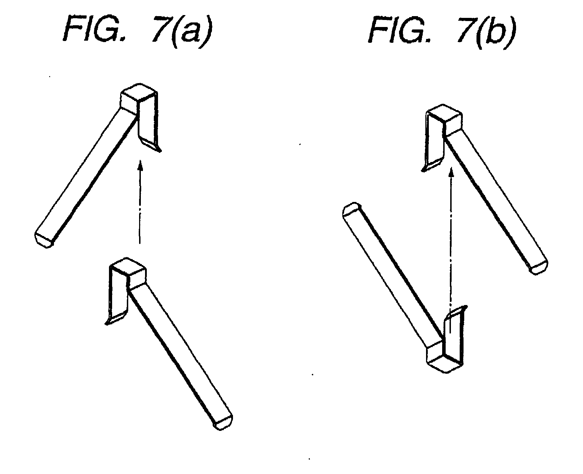

However, in the conventional tape cassette as described above, when the tape cassettes are transported or assembled, a large number of the leaf springs are encased in a box or the like as one of components of the tape cassettes. On this occasion, it has been a problem that the fitting portion of one leaf spring is entangled with another leaf spring as shown in Figure 7(a) or (b), in other words, the other leaf spring enters into the substantially C-shaped part constituting the fitting portion of the leaf spring in a direction of an arrow in the drawings, and it becomes difficult to detach the one from the other.

Once the leaf springs have been entangled, it is hardly possible to detach them, and the leaf springs will be deformed if they are forced to be detached. Therefore, it has been a problem that the leaf springs cannot exert their functions of pressing the lid locking member, and the functions as the leaf spring will be deteriorated.

Moreover, because the leaf springs cannot be efficiently taken out one by one, efficiency of assembling work will be reduced.

Accordingly, a problem that the invention is to solve is to provide a leaf spring for biasing the lid locking member which will not be entangled with another leaf spring, even when a large number of the leaf springs are contained together as when they are transported and assembled.

Further, in the conventional tape cassette as described above, because a thickness of the leaf spring is as thin as 0.05mm to 0.1mm, there has been a problem that due to a dimensional error between the rib of the lower case to which the leaf spring is to be fitted and the rib of the upper case for pressing the leaf spring, the rib of the upper case cannot press the leaf spring or, alternatively, there is the problem that the leaf spring may fall when the ribs of the upper and the lower cases are abutted against each other.

Moreover, in a case where the fitting portion of the leaf spring and the rib of the lower case are dimensioned so that the fitting portion of the leaf spring may clamp --- with considerable force --- the rib of the lower case to which the leaf spring is to be fitted, there has been a problem that assembling ability of the leaf spring into the lower case will be lowered, and efficiency of assembling work will be deteriorated.

Accordingly, another problem that the invention is to solve is to provide a leaf spring which is improved in the assembling ability into the lower case and in which positional control of the leaf spring can be reliably attained.

In order to solve the above and other described problems, there is provided, according to one aspect of the invention, a tape cassette which comprises a tape-like medium windingly provided in a case body, the tape-like medium being drawn out to an exterior of the case body, a lid adapted to be opened and closed for covering the drawn out tape-like medium while the tape cassette is not in use and for exposing the drawn out tape-like medium while the tape cassette is in use, at least one lid locking member for preventing a release of the lid when the lid is closed, and a leaf spring for biasing the lid locking member, characterized in that the leaf spring includes a fitting portion which is formed by being bent in a substantially C-shape, and a pressing portion for pressing the lid locking member, and the leaf spring is constructed in such a manner that a width and a longitudinal length of the fitting portion are different from each other.

In this embodiment of the invention, the width and the longitudinal length of the fitting portion of the leaf spring which is formed by being bent in a substantially C-shape are different from each other. Accordingly, in the case where the longitudinal length is longer than the width, even though one of the leaf springs happens to enter into the fitting portion of another leaf spring, both the leaf springs can be easily detached from each other. Similarly, in the case where the width is larger than the longitudinal, length, one of the leaf springs will not enter into the fitting portion of another leaf spring.

Accordingly, the leaf springs will not be entangled with one another, even when a large number of the leaf springs are contained together as when they are transported and assembled.

According to another embodiment of the present invention, a tape cassette comprises a case body including an upper case and a lower case, a tape-like medium windingly provided in the case body, the tape-like medium being drawn out to an exterior of the case body, a lid adapted to be opened and closed for covering the drawn out tape-like medium while the tape cassette is not in use and for exposing the drawn out tape-like medium while the tape cassette is in use, and at least one lid locking member for preventing a release of the lid when the lid is closed and a leaf spring for biasing the lid locking member both of which are provided in the lower case, characterized in that the leaf spring includes a fitting portion which is formed by being bent in a substantially C-shape, a pressing portion for pressing the lid locking member, and an elastically deformable projected portion formed on an upper face of the fitting portion and protruding toward the upper case, the upper case being provided with a pressing part for pressing the projected portion of the leaf spring at a position facing with the projected portion.

In this embodiment of the invention, the projected portion is provided on the upper face of the fitting portion of the leaf spring so as to protrude toward the upper case. Meanwhile, the pressing part is provided on the upper case at the position facing with the projected portion of the leaf spring. When the leaf spring is fitted to the lower case, and then the upper case is fitted to the lower case, the pressing part of the upper case is positioned on the projected portion of the leaf spring. Because the positional control of the leaf spring is conducted on a side of the upper case, assembling ability of the leaf spring into the lower case will not be affected. Moreover, because the projected portion of the leaf spring is elastically deformed when the pressing part of the upper case presses the projected part of the leaf spring, the dimensional error of a certain extent can be absorbed.

According to another aspect of this embodiment of the invention, the projected portion of the leaf spring is formed by bending outer edges of laterally opposite sides of the fitting portion. According to this aspect of the invention, the projected portion is formed by bending the outer edges of the opposite sides of the fitting portion. Therefore, the projected portion can be integrally formed with the leaf spring, and can be made by a simple process.

### Brief Description of the Drawings

Embodiments of the invention will now be described with reference to the drawing figures, wherein:
Figure 1 is an exploded perspective view showing one embodiment of a tape cassette according to the invention;
Figure 2(a) is a perspective view of a leaf spring in Figure 1 and Figure 2 (b) is a perspective view of a conventional leaf spring;
Figure 3 is a perspective view showing another embodiment of the leaf spring;
Figure 4 is a perspective view of another embodiment of the leaf spring which may be used in the same manner as that shown in Figure 1;
Figure 5 is a perspective view for explaining an assembling step of a lid locking member and the leaf spring into a lower case;
Figures 6(a) and 6(b) are sectional views for explaining states wherein the leaf spring according to Figure 4 is attached to the lower case, and the upper case is further mounted thereon, in which Figure 6(a) shows a state before the upper case is mounted, and Figure 6(b) shows a state after the upper case has been mounted; and
Figure 7 is a perspective view for explaining the manner in which conventional leaf springs are entangled with each other.

### Detailed Description Of The Invention

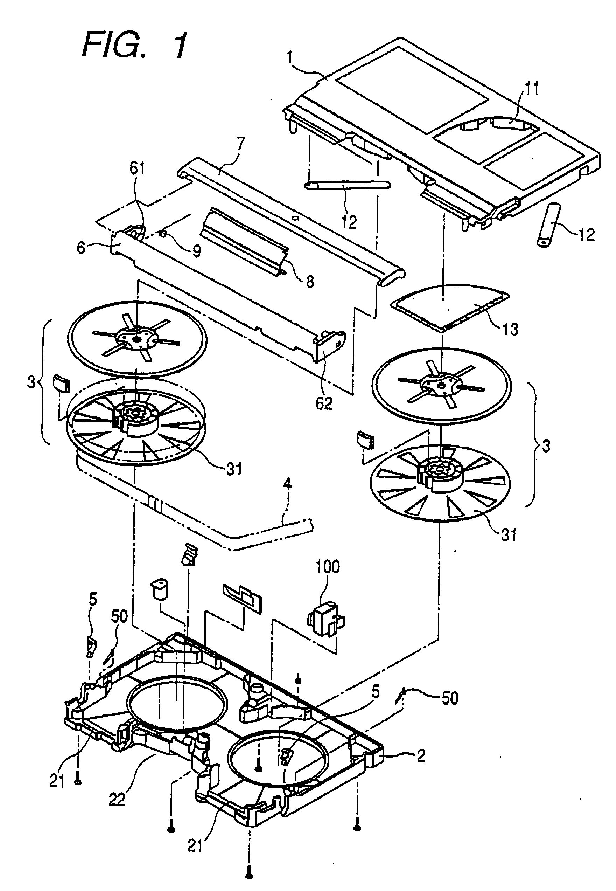

Now, referring to the drawings, embodiments of the invention will be described. Figure 1 is an exploded perspective view showing an embodiment of the tape cassette according to the invention.

A case body consists of an upper case 1 and a lower case 2. A pair of tape reels 3 wound with a tape-like medium (a magnetic tape, for example) 4 for recording information are rotatably contained in the case body. Springs 12 for pressing the tape reels 3 downward are attached to an inner face of the upper case 1.

Openings 21 are formed at both end portions of a front face of the lower case 2. The tape-like medium 4 is so arranged as to come out from one of the openings 21 to the exterior, pass along the front face of the lower case 2, and return into the case body through the other opening 21.

To a front face of the upper case 1, is fitted a lid body (6, 7, 8) which is adapted to open and close a front face of the case body. The lid body includes a front lid 6, an upper lid 7 and a back lid 8. The front lid 6 is formed in a substantially C-shape and is rotatably mounted on the upper case 1 by means of support shafts 61 which are provided on inner faces of side walls 62 at left and right ends of the front lid 6. A torsion coil spring 9 is attached to one of the support shafts 61. The front lid 6 is always biased in a closing direction by means of the torsion coil spring 9.

Still further, lid locking members 5 and leaf springs 50 are provided outside the openings 21 of the lower case 2. These lid locking members 5 are adapted to be engaged with side walls 62 of the front lid 6 so that the front lid 6 may not be opened when the tape cassette is not in use. The leaf springs 50 are adapted to bias the lid locking members 5 in a locking direction.

The upper lid 7 is attached to the front lid 6, and in turn, the back lid 8 is attached to the upper lid 7. The front lid 6 and the upper lid 7 have substantially the same width as the upper case 1. However, the back lid 8 is arranged in a recess 22 in the front face of the lower case 2, and has substantially the same width as a lateral length of the recess 22. The back lid 8 is opened and closed within the recess 22.

While the tape cassette is not in use, the tape-like medium 4 passing along the front face of the lower case 2 is covered and protected with the front lid 6, the upper lid 7 and the back lid 8. On the other hand, when the tape cassette is in use, lock of the front lid 6 by the lid locking members 5 is released, and the front lid 6 is rotated upward above the upper case 1. At the same time, in association with this motion of the front lid 6, the upper lid 7 and the back lid 8 retreat to determined positions to expose the tape-like medium 4 which is positioned at the front face of the lower case 2.

A reel brake 100 is disposed in a backward center part of the lower case 2 to be slidable with respect to the tape reels 3 and biased toward the tape reels 3 by means of a spring. The reel brake 100 slides along a guide groove in the lower case 2 with its guided part engaged with the guide groove.

A lower flange 31 of the tape reel 3 is provided with teeth along its outer circumference. While the tape cassette is not in use, a tip end of a claw of the reel brake 100 enters between the teeth of the lower flange 31 thereby to lock the tape reels 3, thus preventing an idle rotation of the tape reels 3.

On the other hand, when the tape cassette is in use, the reel brake 100 is moved apart from the tape reels 3 against the biasing force of the spring, and is released from the engagement with the teeth of the lower flange 31 to place the tape reels 3 in a rotatable condition.

A sector-shaped open window 11 is formed in the upper case 1, and a window member 13 in a shape of a flat plate formed of transparent resin is fixed by welding or so to an inner face of the upper case 1 at an area including the open window 11. A residual amount of the tape-like medium 4 can be visually observed through a transparent upper flange of the tape reel 3 by way of the window member 13.

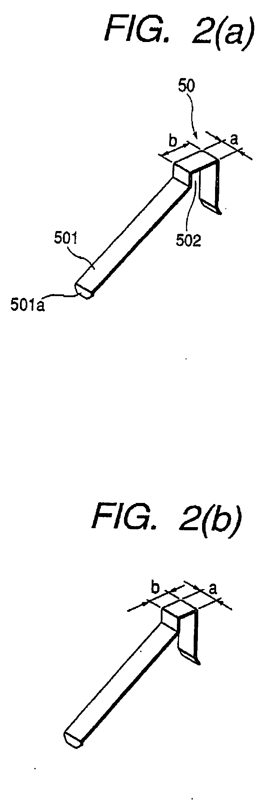

Figure 2(a) is a perspective view showing one embodiment of the leaf spring 50 in Figure 1. Figure 2(b) is a perspective view showing the conventional leaf spring for reference.

The leaf spring 50 is formed by bending a thin plate member in a strip shape at determined positions. The leaf spring 50, in the embodiment of Figure 2(a), includes a pressing portion 501 for pressing the lid locking member 5, and a fitting portion 502 for fitting the leaf spring 50 to the case body (for example, the lower case 2). A distal end 501a of the pressing portion 501 is bent inwardly, so that the lid member 5 may not be shaved when the distal end is abutted, against the lid locking member 5.

The fitting portion 502 of the leaf spring 50 is bent in a substantially C-shape. A width a and a longitudinal length b of the fitting portion 502 at an area between folding lines are made different from each other. In the embodiment of Figure 2(a), they are set so as to be a < b.

It is to be noted that the width a and the longitudinal length b have been set to be substantially the same in the conventional leaf spring as shown in Figure 2(b). Accordingly, the leaf springs may be entangled with one another as shown in Figs. 7(a) or (b).

However, by forming the leaf spring 50 as in this embodiment, even though one of the leaf springs 50 enters into the fitting portion 502 of another leaf spring 50 in case where a large number of the leaf springs 50 are contained in a box or the like when the leaf springs 50 are transported or assembled, they can be easily detached. Therefore, the leaf springs will not be entangled with one another.

Specifically, the width a is about 1.0mm, and the longitudinal length b is about 1.5mm.

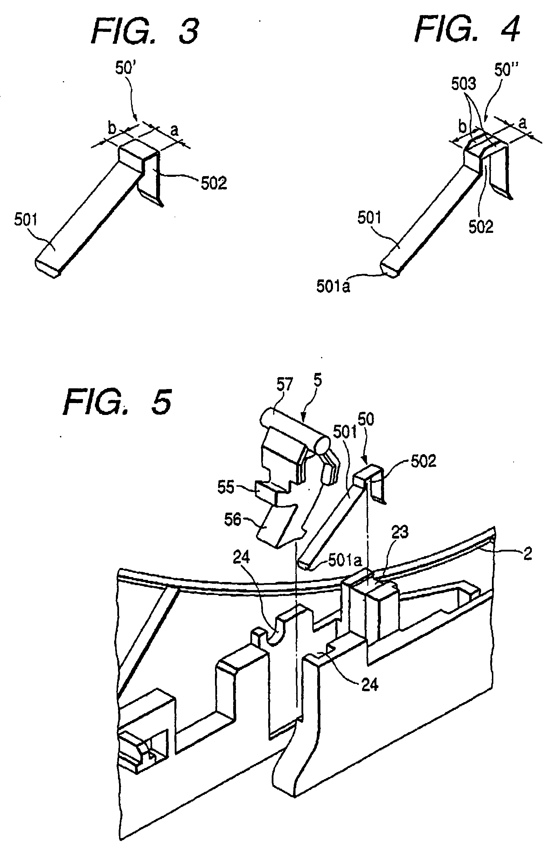

Figure 3 is a perspective view of another embodiment (a leaf spring 50') of the leaf spring. In this embodiment, the width a and the longitudinal length b of the fitting portion 502 of the leaf spring 50' are set to be a > b. When the leaf spring is constructed in this manner, the fitting portion 502 of other leaf springs 50' will not enter into the fitting portion 502 and the leaf springs 50' will not be entangled with one another. Thus, substantially the same effect as described above can be obtained.

According to the embodiments of the invention as shown in Figures 2(a) and 3, the width and the longitudinal length of the fitting portion of the leaf spring at the area between the folding lines are made different front each other. With this structure, in case where the longitudinal length is longer than the width, for example, even though one of the leaf springs happens to enter into the fitting portion of another leaf spring, both the leaf springs can be easily detached from each other. In case where the width is larger than the longitudinal length, one of the leaf springs will not enter into the fitting portion of another leaf spring.

Accordingly, the leaf springs will not be entangled with one another, even when a large number of the leaf springs are contained together as when they are transported and assembled.

Therefore, since the leaf spring will not be deformed at assembling, the lid locking member can be biased with an appropriate force at any time. Moreover, assembling efficiency can be improved.

Figure 4 shows another embodiment of the leaf spring of the present invention. In this embodiment, leaf spring 50'' is formed in the same manner as the previous embodiments, and includes a projected portion 503 provided on an upper face of the fitting portion 502 and protruding towards the upper case 1. The projected portion 503 may be formed by bending upward outer edges of laterally opposite sides of the fitting portion 502. The projected portion 503 is flexibly formed owing to elasticity of the material from which the leaf spring 50'' is made.

Figure 5 is a perspective view for explaining an assembling step of the lid locking member 5 and the leaf spring 50 into the lower case 2. Although reference is made to the leaf spring 50, the sane assembling step is performed for leaf springs 50' and 50'' of the other embodiments of the invention.

The lid locking member 5 includes a rotary shaft 57 in a shape of a round rod laterally extending in an upper end part of the body, an engaging part 55 adapted to be engaged with an engaged part of the side wall 62 of the front lid 6, and a part 56 to be pressed by a releasing member of a recording and/or reproducing apparatus so that the lid locking member 5 releases the lock of the front lid 6. Both ends of the rotary shaft 57 are fitted in groove-like cut-outs 24 of a U-shape formed in the lower case 2 thereby to rotatably support the lid locking member 5.

The leaf spring 50 is fitted to a rib 23 of the lower case 2, in such a manner that the fitting portion 502 (the substantially C-shaped portion) of the leaf spring enters into an upper end part of the rib 23 of the lower case 2. An upper end face of the rib 23 is stepped higher at both sides so that lateral displacement of the leaf spring 50 can be prevented.

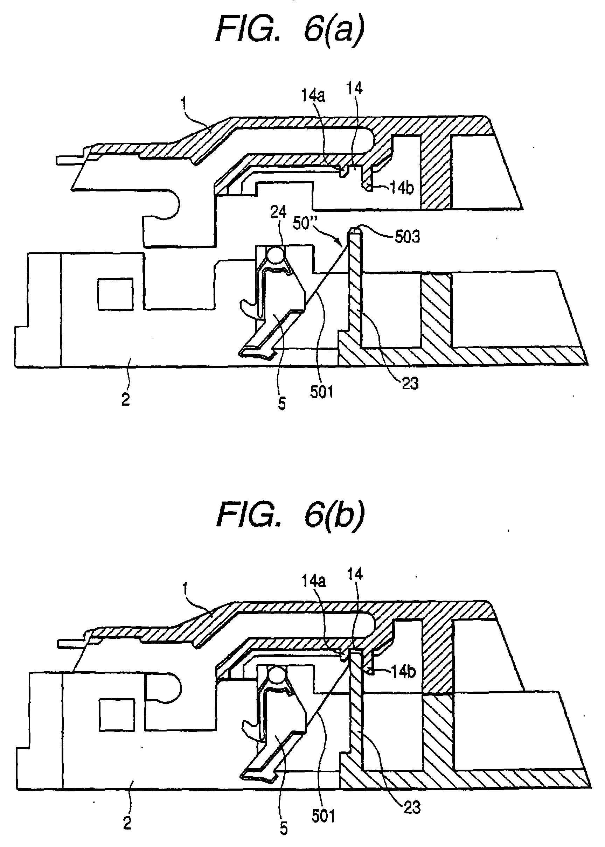

Figures 6(a) and 6(b) are sectional views for explaining states wherein the leaf spring 50'' is attached to the lower case 2, and the upper case 1 is further mounted thereon. Figure 6(a) shows a state before the upper case is mounted, and Figure 6(b) shows a state after the upper case has been mounted.

The upper case 1 is provided with a pressing part 14 of a concave shape in a cross section on its inner face at a position facing with the projected portion 503 of the leaf spring 50''. This pressing part 14 includes a rib 14a and a rib 14b which are facingly arranged with a space slightly longer than a longitudinal length b of the fitting portion 502.

When the upper case 1 has been mounted on the lower case 2 as shown in Figure 6(b), the fitting portion 502 (the substantially C-shaped portion) of the leaf spring 50'' enters into the pressing part 14. Further, the projected portion 503 of the leaf spring 50'' is abutted against a flat face area between the ribs 14a and 14b of the pressing part 14. This means that when the upper case 1 has been mounted, there is formed a gap between the above mentioned flat face area of the pressing part 14 of the upper case 1 and the upper face of the fitting portion 502 of the leaf spring 50'' fitted to the lower case 2. Moreover, the flat face area of the pressing part 14 of the upper case 1 is positioned below an upper end of the projected portion 503 of the leaf spring 50''.

In this manner, the projected portion 503 of the leaf spring 50'' is deflected by means of the pressing part 14 within an elastically deformable extent. Accordingly, the fitting portion 502 of the leaf spring 50'' is pressed from above by the pressing part 14.

With the above-described structure, even though relative positions of the pressing part 14 of the upper case 1 and the rib 23 of the lower case 2 have changed more or less due to the dimensional error between the upper case 1 and the lower case 2, the change can be absorbed by deflection of the projected portion 503 of the leaf spring 50''.

In the embodiment as shown in Figures 4, 6(a) and (b), the projected portion 503 of the leaf spring 50'' is formed by bending apart of the leaf spring 50''. However, alternatively, the elastically deformable projected portion may be formed by conducting a drawing work on the upper face of the fitting portion 502.

Moreover, the concave shape of the pressing part 14 of the upper case 1 as shown in the above-described embodiment may be substituted by a simple rib, provided that it is shaped and positioned to press the projected portion 503 of the leaf spring 50'' from above.

According to the embodiment of the invention as shown in Figures 4, 6 (a) and (b), the projected portion of the leaf spring is pressed by the pressing part of the upper case and, therefore, the positional control of the leaf spring can be reliably conducted without affecting the assembling ability of the leaf spring into the lower case. Moreover, because the projected portion of the leaf spring is elastically deformed when the pressing part of the upper case has pressed the projected portion, the dimensional error of a certain extent can be absorbed.

According to another aspect of this embodiment of the invention, the projected portion can be integrally formed with the leaf spring, and can be made by a simple process.

Although the leaf spring of the present invention has been described in connection with exemplary embodiments thereof, it should not be limited except as defined by the following claims.

## Claims

1. A tape cassette comprising;
a case body;
a tape medium windingly provided in said case body, said tape medium being drawn out to an exterior of said case body;
a lid adapted to be opened and closed for covering said drawn out tape medium while said tape cassette is not in use and for exposing said drawn out tape medium while said tape cassette is in use;
at least one lid locking member for preventing a release of said lid when said lid is closed; and
a leaf spring for biasing said lid locking member, said leaf spring including a fitting portion which is formed in a substantially C-shape having a longitudinal length and a width, and a pressing portion for pressing said lid locking member, wherein said leaf spring is constructed so that said width and said longitudinal length of said fitting portion are different from each other.

2. The tape cassette as claimed in claim 1, wherein said width is greater than said longitudinal length.

3. The tape cassette as claimed in claim 1, wherein said longitudinal length is greater than said width.

4. The tape cassette as claimed in claim 1, wherein said fitting portion further includes a projected portion.

5. A tape cassette comprising:
a case body having an upper case and a lower case;
a tape medium windingly provided in said case body, said tape medium being drawn out to an exterior of said case body;
a lid adapted to be opened and closed for covering said drawn out tape medium while said tape cassette is not in use and for exposing said drawn out tape medium while said tape cassette is in use;
at least one lid locking member for preventing a release of said lid when said lid is closed; and
a leaf spring for biasing said lid locking member, said leaf spring including a fitting portion which is formed in a substantially C-shape, a pressing portion for pressing said lid locking member, and an elastically deformable projected portion formed on an upper face of said fitting portion and protruding toward said upper case, wherein both said lid locking member and said leaf spring are provided in said lower case;
said upper case being provided with a pressing part for pressing said projected portion of said leaf spring at a position facing said projected portion.

6. The tape cassette as claimed in claim 5, wherein said projected portion of said leaf spring is formed by bending outer edges of laterally opposite sides of said fitting portion.

7. The tape cassette as claimed in claim 5, wherein said fitting portion has a longitudinal length and a width and is constructed so that said width and said longitudinal length are different from each other.

8. The tape cassette as claimed in claim 7, wherein said width is greater than said longitudinal length.

9. A tape cassette as claimed in claim 7, wherein said longitudinal length is greater than said width.
